# EUROPEAN PATENT APPLICATION

(11) **EP 4 831 062 A1**
(43) Date of publication of application: **28.10.2026**
(21) Application number: 25172661.8
(22) Date of filing: 25.04.2025
(51) Int. Cl.: B64D 27/33, B64D 27/355, B64D 27/357, B64D 31/18

(54) **PROPULSION SYSTEM HAVING AN AUXILIARY ENERGY STORAGE SYSTEM AND A FUEL CELL SYSTEM**

(71) Applicant: General Electric Deutschland Holding GmbH, 60313 Frankfurt (DE); Ge Avio S.r.l., Rivalta di Torino (IT); GE Marmara Technology Center Muhendislik Hizmetleri Ltd, 41471 Gebze Kocaeli (TR)
(72) Inventor: SPAGNOLO, Cosimo, 85748 GARCHING (DE); CENGELCI, Ekrem, 34880 Istanbul (TR); CANTAGALLI, Silvia, 10040 Rivalta di Torino (IT); OSAMA, Mohamed, 85748 Garching (DE)
(74) Representative: Openshaw & Co.

(57) **Abstract**

A propulsion system (112) for an aircraft is provided. The propulsion system includes a fan section (302) and an electric bus (320). A first electric machine (308) is electrically connected to the electric bus (320). A second electric machine (314) is electrically connected to the electric bus (320). A fuel cell system (300) is electrically connected to the first electric machine (308) and the second electric machine (314) via the electric bus (320). An auxiliary energy storage system (316) is electrically connected to the first electric machine (308), the second electric machine (314), and the fuel cell system (300) via the electric bus (320). The auxiliary energy storage system (316) is configured to supply power to the first electric machine (308) and the second electric machine (314) during transients of the fuel cell system (300).

## Description

### FIELD

The present disclosure relates to a propulsion system for an aircraft having an auxiliary energy storage system and a fuel cell system.

### BACKGROUND

Aeronautical vehicles use a variety of power sources to drive one or more propulsors that may generate thrust for the vehicles. Many vehicles use gas turbine engines, having a turbomachine and a rotor assembly. For example, the turbomachine includes a compressor section, a combustion section, and a turbine section in serial flow order, and the rotor assembly is configured as a fan assembly.

Fuel cells may be used as a source of power for an electric motor, and the electric motor may be used to at least partially power the one or more propulsors. A compressor may be utilized for supplying air to the fuel cells. However, operation of the compressor may be limited by the altitude of the aeronautical vehicle. Additionally, a ramp-up power delay of the fuel cells may cause power availability issues during transient operations of the aeronautical vehicle.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic diagram of an aeronautical vehicle in accordance with an aspect of the present disclosure.
FIG. 2 is a schematic diagram of a propulsor in accordance with an aspect of the present disclosure.
FIG. 3 is a schematic diagram of a propulsion system including a fuel cell system in accordance with an aspect of the present disclosure.
FIG. 4 is a schematic diagram of a propulsion system including a fuel cell system in accordance with an aspect of the present disclosure.
FIG. 5 is a schematic diagram of a propulsion system including a fuel cell system in accordance with an aspect of the present disclosure.
FIG. 6 is a schematic diagram of a propulsion system including a fuel cell system in accordance with an aspect of the present disclosure.
FIG. 7 is a schematic diagram of a propulsion system including a fuel cell system in accordance with an aspect of the present disclosure.
FIG. 8 is a perspective view of a fuel cell of the fuel cell system of FIG. 3 in accordance with an exemplary aspect of the present disclosure.
FIG. 9 is a flow chart of a method of performing a start-up sequence of a propulsion system in accordance with an exemplary aspect of the present disclosure.
FIG. 10 is a flow chart of a method of operating a propulsion system in accordance with embodiments of the present disclosure.
FIG. 11 is a graph of power provided to an electric machine in accordance with exemplary aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first," "second," and "third" may be used interchangeably to distinguish one component from another and are not intended to signify location or importance of the individual components.

The term "electric machine" may generally refer to a machine having a stator and a rotor, the rotor rotatable relative to the stator. Additionally, the electric machine may be configured in any suitable manner for converting mechanical power, such as from a turbine machine like a gas turbine engine, to electrical power, or electrical power to mechanical power. For example, the electric machine may be configured as a synchronous reluctance electric machine; a permanent magnet electric machine, such as an internal permanent magnet electric machine, and/or as a spoke permanent magnet electric machine; or a closed rotor slot induction machine. In such a manner, the electric machine may be operable to generate or utilize alternating current (AC) electric power or direct current (DC) electric power. It will further be appreciated that the stator, the rotor, or both may generally include one or more of a plurality of coils or winding arranged in any suitable number of phases, one or more permanent magnets, one or more electromagnets, etc.

As will be discussed in more detail below, fuel cells are electro-chemical devices which can convert chemical energy from a fuel into electrical energy through an electro-chemical reaction of the fuel, such as hydrogen, with an oxidizer, such as oxygen contained in the atmospheric air. Fuel cell systems may advantageously be utilized as an energy supply system because fuel cell systems may be considered environmentally superior and highly efficient when compared to at least certain existing systems. To improve system efficiency and fuel utilization, the fuel cell system may include an anode recirculation loop. As a single fuel cell can only generate about 1V voltage, a plurality of fuel cells may be stacked together (which may be referred to as a fuel cell stack) to generate a desired voltage. Fuel cells may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolytes. Each of these fuel cells may have specific benefits in the form of a preferred operating temperature range, power generation capability, efficiency, etc.

The present disclosure is generally related to a propulsion system for an aeronautical vehicle that utilizes a fuel cell system. Fuel (e.g., hydrogen) and air (e.g., oxygen gas) are supplied to a fuel cell unit of the fuel cell system and the fuel cell unit generates electrical energy by electrochemical reaction between the fuel and the air. The fuel cell system may require pressurized air (e.g., between about 1.2 bar up to 2.5 bar) to maximize the system's performance. The pressurized air may be supplied to the fuel cell unit via multiple compressors and an air compressor tank, which may be powered by a power supply. In a typical fuel cell system, the multiple compressors, the compressor air tank, and power supply are part of a balance of plant (BoP) system, which refers to all the auxiliary components and systems required to support operation of the fuel cell system. The compressors, the compressor air tank, and the power supply of the BoP typically involve a large weight and volume, which can impact the efficiency of the fuel cell system when used for powering an aircraft.

This disclosure includes several embodiments of an electrical propulsion system having a fuel cell system with an integrated BoP, which advantageously reduces the weight and volume of the fuel cell systems BoP by eliminating one of the compressors and the air compressor tank while providing several advantages, and which allows the integrated BoP to be directly fed by the fuel cell system. For example, the electrical propulsion system may include an auxiliary energy storage unit, which may be utilized for powering the fan during transient operations of the aircraft, which enables starting/ramping up the compressor of the BoP, starting/ramping up the fuel cells of the fuel cell system, and/or pre-charging capacitors of the electrical propulsion system. Additionally, the fuel cell system may be utilized for recharging a battery of the auxiliary energy storage unit.

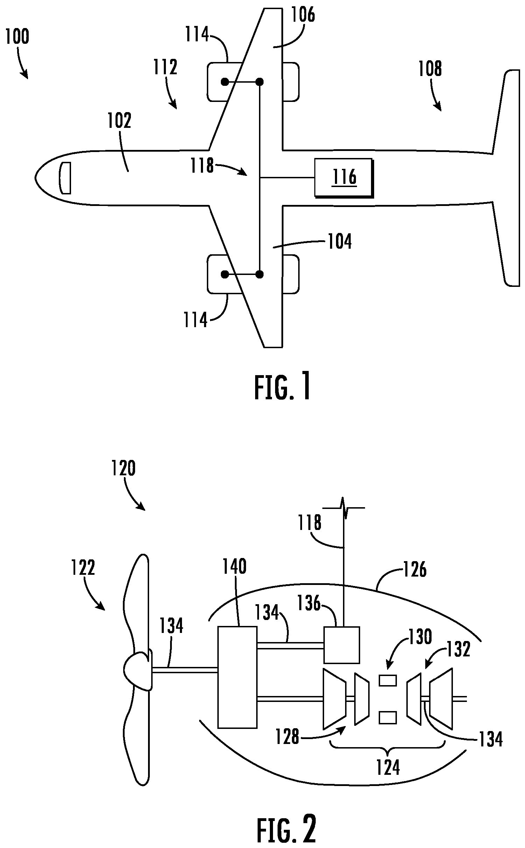

Referring now to the drawings, FIG. 1 is a schematic diagram of an aeronautical vehicle 100 in accordance with an aspect of the present disclosure. The exemplary aeronautical vehicle 100 of FIG. 1 is configured as an aircraft. The aircraft generally includes a fuselage 102 forming a main body portion of the vehicle 100, a first wing 104 extending from a port side of the aircraft and a second wing 106 extending from a starboard side of the aircraft. The first and second wings 104, 106 each extend laterally from the fuselage 102. The aircraft further includes an empennage 108.

Additionally, the vehicle 100 includes a propulsion system 112 that includes one or more propulsors 114 and one or more power sources 116. The propulsion system 112 further includes an electric power distribution bus 118 electrical coupling various components of the propulsion system 112.

FIG. 2 is a schematic diagram of a propulsor in accordance with an aspect of the present disclosure. More specifically, the propulsor of FIG. 2 is configured as a gas turbine engine 120 that may be incorporated into the exemplary propulsion system 112 of the vehicle 100 of FIG. 1, such as the one or more propulsors 114. The gas turbine engine 120 includes a fan section 122 and a turbomachine 124 drivingly coupled to the fan section 122. The turbomachine 124 generally includes a compressor section 128, a combustion section 130, and a turbine section 132 arranged in serial flow order, and one or more shafts 134 connecting one or more compressors of the compressor section 128, and one or more turbines of the turbine section 132. Moreover, the fan section 122 is coupled to the turbomachine 124 via a gearbox 140 with the one or more shafts 134. The gearbox 140 includes a plurality of gears for adjusting a rotational speed of the fan section 122 relative to a rotational speed of the one or more compressors of the compressor section 128 and the one or more turbines of the turbine section 132.

**In** at least one example embodiment, the gas turbine engine 120 may be configured as a turbofan engine and include an outer nacelle 126 enclosing at least in part the fan section 122 and the turbomachine 124, as shown in FIG. 2. **In** other example embodiments, the gas turbine engine may be configured as a turboprop. For example, the fan section 122 may not be enclosed by the outer nacelle 126 in such embodiments.

Moreover, as shown in FIG. 2, the gas turbine engine 120 further includes an electric machine 136 rotatable with the one or more shafts 134 of the fan section 122. The electric machine 136 may be coupled to the fan section 122 in parallel with the turbomachine 124. Additionally, the electric machine 136 may be configured to receive electric power from the electric power distribution bus 118 to, e.g., drive the fan of the fan section 122, as will be discussed in greater detail below. Accordingly, one or both of the turbomachine 124 and the electric machine 136 may drive rotation of the fan section 122.

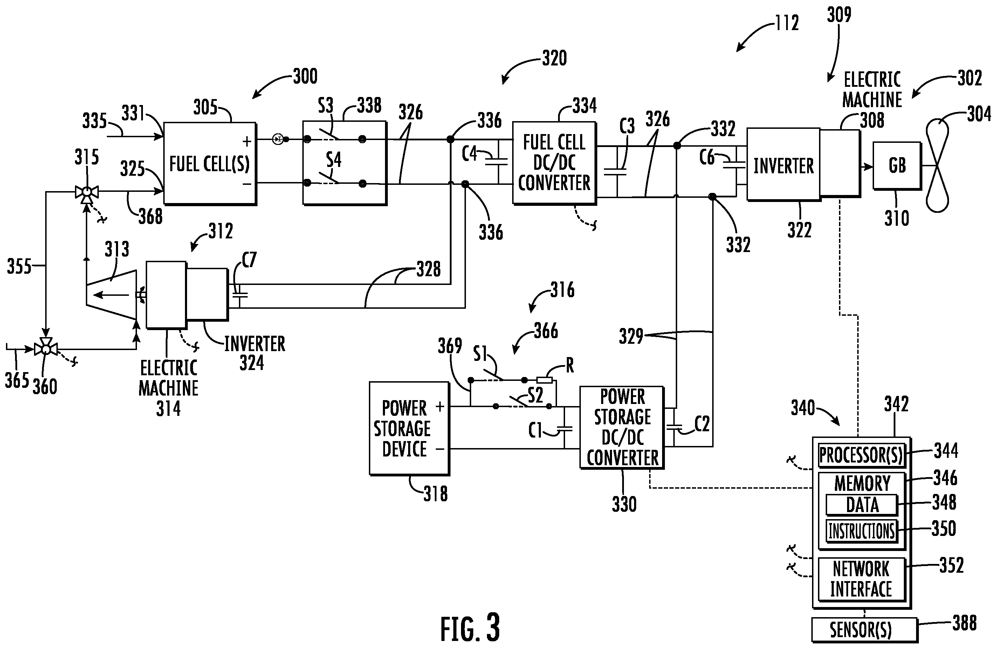

FIGS. 3-7 each illustrate a schematic diagram of the propulsion system 112 including a fuel cell system 300 having a plurality of fuel cells 305 in accordance with an aspect of the present disclosure. The exemplary fuel cell system 300 may be integrated into the vehicle 100 and used with one or more propulsors, such as the propulsors 114. More specifically, the fuel cell system 300 may be incorporated into the propulsion system 112 of the vehicle 100 as the one or more power sources 116. Accordingly, in some example embodiments, the vehicle 100 may include a plurality of the fuel cell assemblies 300.

As shown, the propulsion system 112 includes a fan section 302 having a fan 304 drivingly connected to a first electric machine 308 of an electric drive system 309. That is, the first electric machine 308 may be configured to drive rotation of the fan 304 of the fan section 302 (e.g., through one or more shafts and/or gearboxes). As shown, the first electric machine 308 may be drivingly connected to the fan 304 through a gearbox 310. The gearbox 310 may include a plurality of gears for adjusting a rotational speed of the fan section 302 relative to a rotational speed of an output shaft of the first electric machine 308. The electric drive system 309 may further include a first inverter 322 electrically connected to the first electric machine 308. The first inverter 322 may be used to convert from the DC power provided by the system to an AC power needed to drive the first electric machine 308.

Additionally, the propulsion system 112 includes a balance of plant (BoP) system 312 having a second electric machine 314 for selectively driving a compressor 313 fluidly connected to the fuel cell system 300. The compressor 313 may be in fluid communication with the plurality of fuel cells 305 (e.g., to provide a flow of pressurized air to the plurality of fuel cells 305). That is, the second electric machine 314 may be drivingly connected to the compressor 313, which may provide a flow of compressed air to the fuel cell system 300 for generating electrical power. The BoP system 312 may further include a second inverter 324 electrically connected to the second electric machine 314. The second inverter 324 may be used to convert from the DC power provided by the system to an AC power needed to drive the second electric machine 314.

The propulsion system 112 further includes an auxiliary energy storage 316 system electrically connected to the first electric machine 308, the second electric machine 314, and the fuel cell system 300. The auxiliary energy storage system 316 may be configured for selectively supplying power to one or more of the first electric machine 308 to drive the fan 304 and/or the second electric machine 314 to drive the compressor 313. Additionally, the auxiliary energy storage system 316 may be configured for selectively receiving power from the fuel cell system 300. The auxiliary energy storage system 316 may include a power storage device 318, such as a battery and/or a super capacitor.

The propulsion system 112 may further include an electric bus 320 (e.g., a DC electric bus having a positive electrical line and a negative electrical line) that electrically connects the various electrical components of the propulsion system 112. The electric bus 320 may distribute electrical power between (i.e., electrically connect) the various electrical components of the propulsion system 112. The electric bus 320 may include electrical wiring or other means for electrically connecting electrical components in the propulsion system 112. For example, the electric bus 320 may electrically connect the fuel cell system 300, the first electric machine 308 (e.g., through the first inverter 322), the second electric machine 314 (e.g., through the second inverter 324), and the auxiliary energy storage system 316. The electric bus 320 may include a main electric bus 326 that electrically connects the fuel cell system 300 (e.g., the plurality of fuel cells 305) to the electric drive system 309 (e.g., to the first inverter 322), a BoP electric bus 328 that electrically connects the BoP system 312 to the main electric bus 326, and an auxiliary electric bus 329 that electrically connects the auxiliary energy storage system 316 to the main electric bus 326. More specifically, the main electric bus 326 may extend between (and electrically connect) the fuel cell 305 and the first inverter 322. The BoP electric bus 328 may extend between (and electrically connect) the second inverter 324 and the main electric bus 326. The auxiliary electric bus 329 may extend between (and electrically connect) the power storage device 318 and the main electric bus 326. Additionally, the electric bus 320 may include a positive electrical lines and negative electrical lines (as indicated by the "+" and "-" symbols in FIGS. 3-7).

In many embodiments, the auxiliary energy storage system 316 may include a power storage DC/DC converter 330 that is electrically connected to the electric bus 320 between the first electric machine 308 and the power storage device 318. More specifically, the power storage DC/DC converter 330 may be disposed in electrical communication on the auxiliary electric bus 328 between the main electric bus 326 and the power storage device 318. In exemplary embodiments, the power storage DC/DC converter 330 may be a bi-directional DC/DC converter that can convert DC from one voltage level to another in both directions. That is, the power storage DC/DC converter 330 may be the bi-directional DC/DC converter that allows for energy to flow from the power storage device 318 (e.g., to the first electric machine 308 or the second electric machine 314) or to the power storage device 318 (e.g., from the fuel cell system 300).

In many embodiments, the propulsion system 112 may further include a fuel cell DC/DC converter 334 that is electrically connected to the electric bus 320 between the fuel cell system 300 and the first electric machine 308. More specifically, the fuel cell DC/DC converter 334 may be disposed in electrical communication on the main electric bus 326 between the first electric machine 308 and the fuel cell system 300. In exemplary embodiments, the fuel cell DC/DC converter 334 may be a bi-directional DC/DC converter that can convert DC from one voltage level to another in both directions. That is, the fuel cell DC/DC converter 334 may be the bi-directional DC/DC converter that allows for energy to flow from the fuel cell system 300 (e.g., to the first electric machine 308 and/or the power storage device 318) or to the second electric machine 314 (e.g., from the power storage device 318).

In this way, by utilizing bi-directional DC/DC converters for both the fuel cell DC/DC converter 334 and the power storage DC/DC converter 330, the system may advantageously operate in a variety of manners including: (1) powering the first electric machine 308 with only the power storage device 318 while powering the second electric machine 314 with one or both of the power storage device 318 and the fuel cell system 300; (2) powering the first electric machine 308 with both the power storage device 318 and the fuel cell system 300 while powering the second electric machine 314 with only the fuel cell system 300; (3) charging the power storage device 318 with the fuel cell system 300 (which may be performed while powering the first electric machine 308 and/or the second electric machine 314 with the fuel cell system 300).

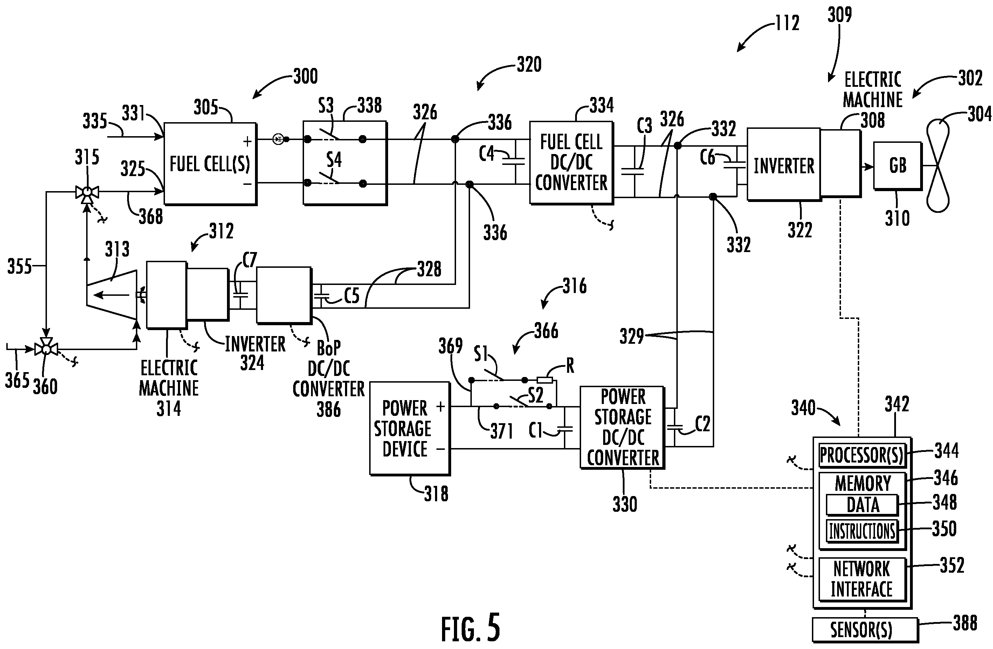

In many embodiments, as shown in FIGS. 5-7, the BoP system 312 may further include a BoP DC/DC converter 386 electrically connected to the electric bus 320 between the fuel cell system and the second electric machine 314. The BoP DC/DC converter 386 may be capable of converting DC flowing from the fuel cell system 300 from one voltage level to another prior to being provided to the second inverter 324 and the second electric machine 314. For example, the DC/DC converter 386 may be configured for converting an input voltage to an output voltage that is several times (e.g., between about 2-100) larger or smaller than the input voltage depending on the embodiment.

As shown, in various embodiments, the auxiliary energy storage system 316 is electrically connected to the electric bus 320 between the first electric machine 308 and the fuel cell DC/DC converter 334. Stated otherwise, when energy is flowing from the auxiliary energy storage system 316 to the first electric machine 308, the auxiliary energy storage system 316 is electrically connected to the electric bus 320 immediately upstream of the first electric machine 308 with respect to the flow of electricity. That is, the auxiliary electric bus 328 may connect to the main electric bus 326 at connection points 332 that are disposed between the first electric machine 308 and the fuel cell DC/DC converter 334.

As shown in FIGS. 3-7, the BoP system 312 (including the second electric machine 314 and the second inverter 324) may electrically connect to the electric bus 320 between the fuel cell system 300 and the fuel cell DC/DC converter 334. Stated otherwise, when energy is flowing from the fuel cell system 300 to the first electric machine 308, the BoP system 312 (including the second electric machine 314 and the second inverter 324) may electrically connect to the electric bus 320 downstream of the fuel cell system 300 with respect to the flow of electricity.

In some embodiments, as shown in FIG. 3 and 5, the BoP electric bus 328 may connect to the main electric bus 326 at connection points 336 that are disposed between the fuel cell system 300 and the fuel cell DC/DC converter 334. That is, when power is flowing from the fuel cell system 300 to the first electric machine, the BoP electric bus 328 may connect to the main electric bus 326 at connection points 336 that are disposed downstream of the fuel cell system 300 and upstream of the fuel cell DC/DC converter 334. In this configuration, power from the power storage device 318 of the auxiliary energy storage system 316 may be provided to the BoP system 312 (e.g., the second electric machine 314) by passing through the fuel cell DC/DC converter 334.

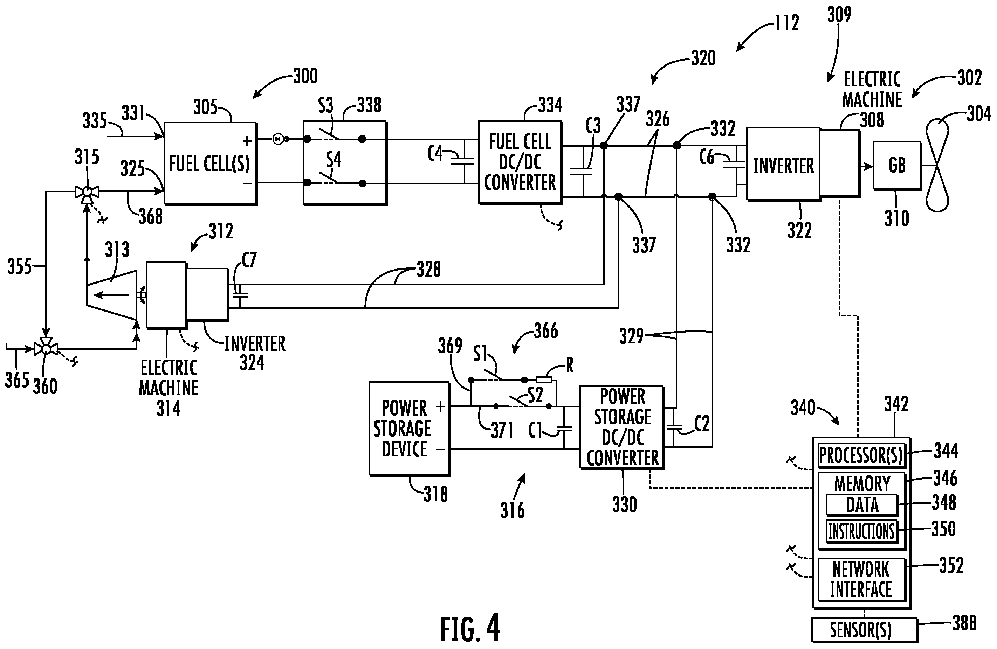

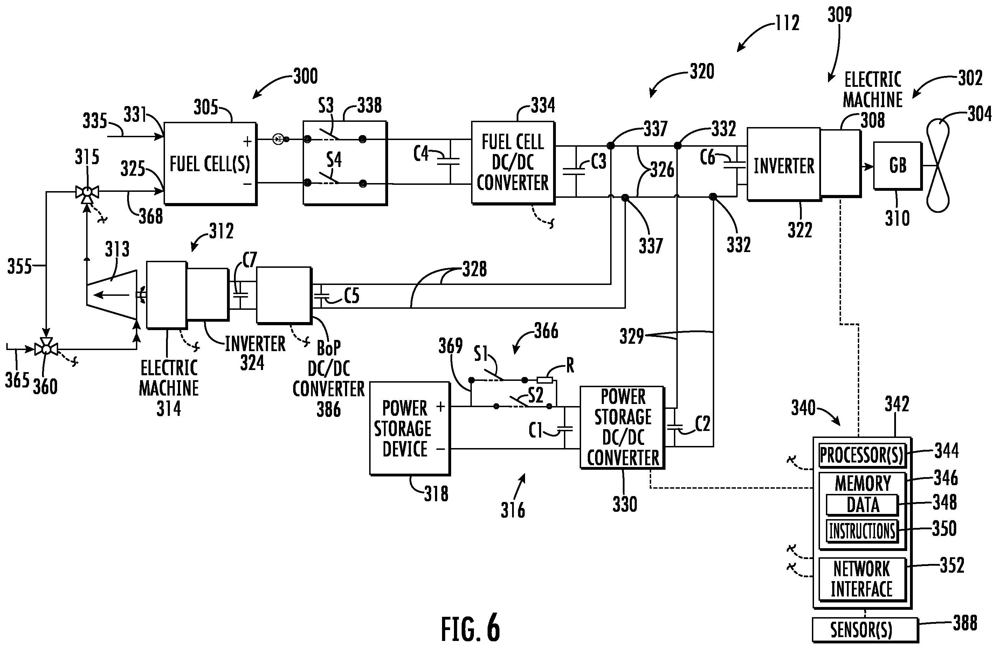

In other embodiments, as shown in FIGS. 4 and 6, the BoP electric bus 328 may connect to the main electric bus 326 at connection points 337 that are disposed between the fuel cell DC/DC converter 334 and the electric drive system 309. More specifically, as shown in FIGS. 4 and 6, the BoP electric bus 328 may connect to the main electric bus 326 at the connection points 337 that are disposed between the fuel cell DC/DC converter 334 and the connection points 332 (e.g., where the auxiliary electric bus 329 connects to the main electric bus 326). This configuration advantageously allows for the power storage device 318 of the auxiliary energy storage system 316 to provide power to the BoP system 312 (e.g., the second electric machine 314) without passing through the fuel cell DC/DC converter 334.

In various embodiments, a plurality of capacitors C1, C2, C3, C4, C5, C6, C7 may be included on the electric bus 320 on either side of various electrical components for energy storage, voltage regulation, noise filtering, etc. For example, the first capacitor C1 and the second capacitor C2 may be disposed on the auxiliary electric bus 329 on either side of the power storage DC/DC converter 330. The third capacitor C3 and the fourth capacitor C4 may be disposed on the main electric bus 326 on either side of the fuel cell DC/DC converter 334. The fifth capacitor C5 (FIGS. 5-7) may be disposed on the BoP electric bus 328 electrically upstream of the BoP DC/DC converter 386 (FIGS. 5-7). The sixth capacitor C6 may be disposed on the main electric bus 326 electrically upstream of the first inverter 322. The seventh capacitor C7 may be disposed on the BoP electric bus 328 electrically upstream of the second inverter 324. Arranging the capacitors C1, C2, C3, C4, C5, C6, C7 in this manner (e.g., on either side of the various electrical components) may advantageously provide a stable power supply to the respective electrical components (e.g., by reducing voltage dips) and/or filter out noise and prevent power fluctuations.

In many embodiments, the auxiliary energy storage system 316 may further include a pre-charge switch system 366 electrically connected to the electric bus 320 between the power storage device 318 and the power storage DC/DC converter 330. Specifically, the pre-charge switch system 366 may include a primary line 369 and a bypass line 371, and a first switch S1 and a resistor R may be disposed on the primary line 369. A second switch S2 may be disposed on the primary line 371 (e.g., without a resistor). The first switch S1 and the second switch S2 may each be movable between an open position (preventing the flow of energy) and a closed position (permitting the flow of energy). In many implementations, the first capacitor C1 may be charged (e.g., over the resistor R) by the power storage device 318 with the pre-charge switch system 366 prior to operation of the propulsion system 112, e.g., by moving the first switch S1 to a closed position and the second switch S2 to an open position.

In exemplary embodiments, the propulsion system 112 may further include a fuel cell switch system 338 electrically connected to the electric bus 320. The fuel cell switch system 338 may include one or more switches S3, S4 that are each movable between an open position (preventing the flow of energy) and a closed position (permitting the flow of energy) and configured for selectively electrically coupling the fuel cell system 300 to the electric bus 320. For example, the fuel cell switch system 338 may include a third switch S3 and a fourth switch S4 each disposed on the main electric bus 326 between the plurality of fuel cells 305 and the connection points 336. The third switch S3 may be disposed on a positive electric line of the main electric bus 326, and the fourth switch S4 may be disposed on a negative electric line of the main electric bus 326. The arrangement of the switches S3, S4 may advantageously allow for power to be selectively provided to the fuel cell DC/DC converter 334 and/or the BoP system 312. For example, with reference to FIG. 3, when the switches S3, S4 are in a closed position, power may be provided to the fuel cell DC/DC converter 334 and the BoP system 312. By contrast, when the switches S3, S4 are in an open position, power is not provided to the fuel cell DC/DC converter 334 and the BoP system 312.

Additionally, the propulsion system 112 may further include at least one bypass valve 315 for controlling a flow of pressurized air 368 from the compressor 313 to the plurality of fuel cells 305. In at least one example embodiment, the bypass valve 315 may be a 3-way valve in fluid communication with the plurality of fuel cells 305, the compressor 313, and the ambient environment. The bypass valve 315 may enable the compressor 313 to operate at a higher compressor ratio. The bypass valve 315 may manage the flow of pressurized air to a fuel cell(s) by controlling when (and how much) air is provided to the fuel cell(s) 305 and when (and how much) air is provided back to the compressor 313. The higher compressor ratio achieved through use of the bypass valve 315 may improve efficiency of the overall system by reducing the amount of energy required to compress air for use in the fuel cell(s) 305. Additionally, the bypass valve 315 may advantageously allow the compressor 313 to operate at low altitudes due to the higher compressor ratio, which is advantageous. The compressor 313 may be a centrifugal compressor. Such a centrifugal compressor may provide high power density, isentropic efficiency, and low noise. Moreover, the compressor 313 may be configured to operate at an altitude of at least 25,000 ft. For example, the altitude of the vehicle 100 including the fuel cell system 300 may be greater than or equal to 0 feet and less than or equal to 25,000 feet.

The plurality of fuel cells 305 includes a first fluid inlet 325 for receiving the flow of pressurized air 368 from the compressor 313. The plurality of fuel cells 305 also includes a second fluid inlet 331 configured to receive a flow of fuel 335 from a fuel source (not shown). For example, the flow of fuel 335 may be a flow of hydrogen fuel in some example embodiments.

In at least one example embodiment, the plurality of fuel cells 305 includes a plurality of fuel cells stacked together and defining a fuel cell stack, as will be discussed with respect to FIG. 4. Further, the plurality of fuel cells 305 may be of any suitable chemistry. For example, the plurality of fuel cells 305 may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits such as various operating temperature ranges, power generation capabilities, efficiencies, etc.

As shown, a controller 340 may be operably and/or communicably coupled to the various components of the propulsion system 112 (e.g., to control the operation of the components). For example, controller 340 may be operably connected (e.g., wired or wirelessly) to the switches S1, S2, S3, S4 (e.g., to move them between an open position and a closed position), the first electric machine 308, the second electric machine 314, the fuel cell DC/DC converter 334, the power storage DC/DC converter 330, the bypass valve 315, and/or a recirculation valve 360. That is, the controller 340 may control operation of the switches S1, S2, S3, S4, the first electric machine 308, the second electric machine 314, the fuel cell DC/DC converter 334, the power storage DC/DC converter 330, the bypass valve 315, and/or a recirculation valve 360.

The controller 340 may include one or more computing devices 342, and the one or more computing devices 342 may include one or more processors 344 and one or more memory devices 346. The memory devices 342 may store instructions 350 that when executed by the one or more processors 344 cause the propulsion system 112 to perform operations. The memory devices 346 can also store data 348 that can be accessed by the processors 344. Moreover, the one or more computing devices 342 include a network interface 352 configured to communicate, for example, with the various components of the propulsion system 112.

The one or more processors 344 may include any suitable processing device, such as a microprocessor, microcontroller, integrated circuit, logic device, and/or other suitable processing device. The one or more memory devices 346 may include one or more computer-readable media, including, but not limited to, non-transitory computer-readable media, RAM, ROM, hard drives, flash drives, and/or other memory devices.

As mentioned above, the bypass valve 315 is configured to control the flow of pressurized air 368 from the compressor 313 to the plurality of fuel cells 305. More particularly, the controller 340 may control the flow of the pressurized air 368 to the plurality of fuel cells 305 via the bypass valve 315 based on an altitude of the vehicle 100. In many embodiments, the propulsion system 112 may include one or more sensors 388 communicably coupled to the controller 340. The one or more sensors 388 may include an altitude sensor communicably coupled to the controller 340 to determine data indicative of an altitude of the vehicle 100. Additionally, the one or more sensors 388 may include a pressure sensor communicably coupled to the controller 340 to determine data indicative of an ambient pressure. The controller 340 may set an operating point of the compressor 313 based on the measured data indicative of the altitude and/or the data indicative of the ambient pressure.

In at least one example embodiment, the plurality of fuel cells 305 may receive an increased supply of the flow of pressurized air 368 from the compressor 313 at lower altitudes. Accordingly, the controller 340 may at least partially open the bypass valve 315 to increase the supply of the pressurized air 368 to the plurality of fuel cells 305 from the compressor 313 based on the altitude of the vehicle 100 being less than or equal to an altitude threshold. Moreover, the supply of the flow of pressurized air 368 to the plurality of fuel cells 305 may be reduced based on the altitude of the vehicle exceeding the altitude threshold. For example, the controller 340 may at least partially close the bypass valve 315 to reduce the flow of the pressurized air 368 to the plurality of fuel cells 305 from the compressor 313 based on the altitude of the vehicle 100 being greater than the altitude threshold. The altitude threshold may be based on the type and capacity of the compressor 313 and the plurality of fuel cells 305. For example, as described above, the compressor may be capable of operation at up to about 25,000 feet. **In** such embodiments, the altitude threshold may be about 5,000 feet, or about 10,000 feet, or about 15,000 feet, or about 20,000 feet.

Any portion of the pressurized air 368 not being utilized by the plurality of fuel cells 305, such as excess air 355, may be discharged from the fuel cell system 300. For example, as discussed above, the plurality of fuel cells 305 may receive a reduced amount of the pressurized air 368 at altitudes exceeding the altitude threshold. Accordingly, the controller 340 may operate the bypass valve 315 such that the plurality of fuel cells 305 is at least partially bypassed and the excess air 355 may be discharged to the ambient environment. For example, if the altitude threshold is 5,000 feet, and the aircraft exceeds this threshold altitude, then the bypass valve 315 may be modulated such that the plurality of fuel cells 305 only receive a portion of the pressurized air 368 from the compressor, and the remainder of the air (e.g., the excess air 355) may be provided to back to an inlet of the compressor 313 or vented to the atmosphere.

Additionally, or alternatively, the excess air 355 may be recirculated for use by the compressor 313. For example, the fuel cell system 300 may include a recirculation valve 360. The recirculation valve 360 may be a 3-way valve in fluid communication with the bypass valve 315, the compressor 313, and the ambient environment. As shown in FIG. 3, the recirculation valve 360 may be downstream of the bypass valve 315 and upstream of the compressor 313. The recirculation valve 360 may be configured to receive the excess air 355 from the bypass valve 315 and provide the excess air 355 to the compressor 313 to generate the pressurized air 368. Moreover, the recirculation valve 360 may receive ambient air 365 from the ambient environment and provide the ambient air 365 to the compressor 313 to generate the pressurized air 368. In other example embodiments, the recirculation valve 360 may discharge at least a portion of the excess air 355 to the ambient environment.

In at least one example embodiment, the fuel cell system 300 may be electrically connected to the first electric machine 308 and the auxiliary energy storage system 316 via the electric bus 320 and configured to supply power to one or both of the first electric machine 308 and/or the auxiliary energy storage system 316. For example, the fuel cell system 300 and/or the auxiliary energy storage system 316 are each configured (e.g., independently or collectively) to supply power to the first electric machine 308 to drive rotation of the fan 304 and/or the second electric machine 314 to drive rotation of the compressor 313. That is, an electrochemical reaction between the flow of the fuel 335 and the flow of the pressurized air 368 occurs within the plurality of fuel cells 305 and provides an electrical power output. Accordingly, the electrical power output from the plurality of fuel cells 305 may be supplied to the first electric machine 308 and/or the second electric machine 314.

The auxiliary energy storage system 316 may be utilized for providing power to the first electric machine 308 and/or the second electric machine 314 during transients of the fuel cell system 300 (i.e., when the fuel cell system 300 is ramping up or down). Transients of the fuel cell system 300 may refer to the non-steady-state behavior when the fuel cell system 300 ramps up or down in power output in response to changing power demands. These transitions in power output may be limited by how quickly fuel/air supply can be adjusted to the fuel cell system 300 and/or a slew rate of the fuel cell system 300. The slew rate is the maximum rate at which the fuel cell system 300 can change power output. The fuel cell system 300 may transition between a first power output and a second power output over a time period in response to a change in power demand (e.g., at the slew rate). During this time period, the auxiliary energy storage system 316 may be utilized for providing power to the first electric machine 308 and/or the second electric machine 314 to compensate for the difference in the power requirement and the power output from the fuel cell system 300 while the fuel cell system 300 transitions.

In other words, the auxiliary energy storage system 316 may be utilized for providing instantaneous power to the first electric machine 308 and/or the second electric machine 314 in response to an increase in power demand from the electric machine(s) 308, 314 while the fuel cell system 300 ramps up to a power output that can meet the power demand of the electric machine(s) 308, 314 alone. Once the fuel cell system 300 ramps up, the auxiliary energy storage system 316 may cease providing power to the electric machine(s) 308, 314, and the power demand may be met solely by the fuel cell system 300.

In one non-limiting example, the fuel cell system 300 may be operating at a power output of about 200 kilowatts (kW) in a first state to meet a first power demand of the electric machine(s) 308, 314. Subsequently, the electric machine(s) 308, 314 may increase to a second power demand that is greater than the first power demand, e.g., the second power demand may be about 900 kW. In response, the auxiliary energy storage system 316 may be utilized in conjunction with the fuel cell system 300 for instantaneously meeting the second power demand while the fuel cell system ramps up to a higher power output over a time period at a slew rate. In various embodiments, the ramp rate (or slew rate) of the fuel cell system 300 may be between about 10 kW/sec and about 100 kW/sec, or such as between about 25 kW/sec and about 75 kW/sec. As such, with the example above, the time period may be between about 10 seconds and about 20 seconds to for the fuel cell system 300 to solely meet the second power demand of about 900 kW. Once the fuel cell system 300 has ramped up to a second power output that meets the second power demand, the auxiliary energy storage system 316 may cease providing power to the electric machine(s) 308, 314. In this way, utilizing both the fuel cell system 300 and the auxiliary energy storage system 316 may advantageously allow for power demands to be met during transients of the fuel cell system 300, which prevents interruptions in power provided to the electric machine(s) 308, 314 that could otherwise occur.

Additionally, the auxiliary energy storage system 316 may be utilized for pre-charging the capacitors C1, C2, C3, C4, C5, C6, C7, e.g., prior to operation of the propulsion system 112. For example, prior to starting (e.g., providing power to) the first electric machine 308, the second electric machine 314, and/or the fuel cell system 300, the power storage device 318 of the auxiliary energy storage system 316 may supply power to each of the capacitors C1, C2, C3, C4, C5, C6, C7 to charge the capacitors.

In additional example embodiments, at least a portion of the electrical power output from the plurality of fuel cells 305 may be supplied to the second electric machine 314 to drive the compressor 313. For example, the second electric machine 314 may be operably coupled to the compressor 313. The electric second electric machine 314 may be configured to receive the electrical power output from the plurality of fuel cells 305 and convert the electrical power into mechanical, rotational force to drive the compressor 313.

In another example embodiment, the fuel cell system 300 may be configured for selectively charging the power storage device 318. For example, at least a portion of the electrical power output from the plurality of fuel cells 305 of the fuel cell system 300 may be supplied to the power storage device 318 of the auxiliary energy storage system 316. For example, at least a portion of the electrical power from the plurality of fuel cells 305 may be utilized for charging the power storage device 318.

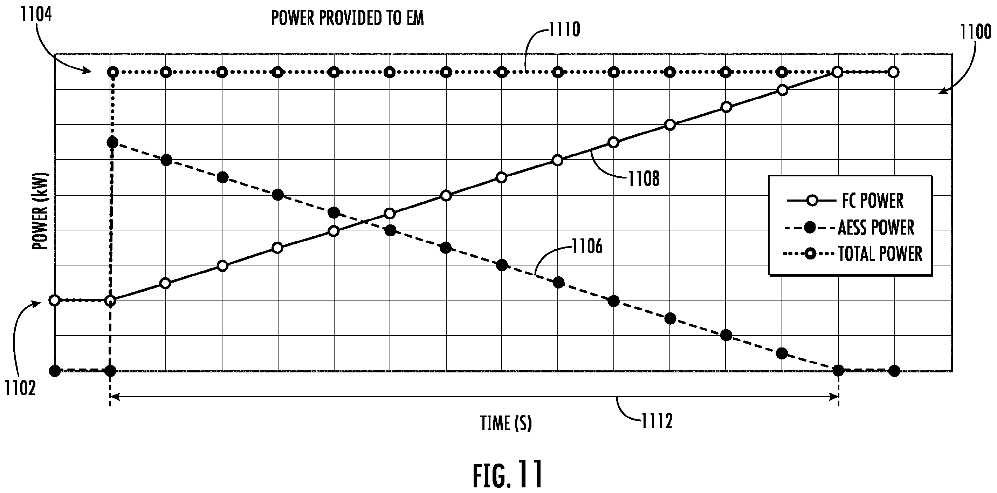

As discussed below in more detail with reference to FIG. 11, in another example embodiment, the the auxiliary energy storage system 316 may provide power to one or both of the first electric machine 308 and/or the second electric machine 314 during transients of the fuel cell system 300 (i.e., while the fuel cell system 300 is ramping up/down the power output at a ramp rate) to compensate for the power provided to the first electric machine 308 and/or the second electric machine 314 by the fuel cell system 300. For example, in some embodiments, the auxiliary energy storage system 316 may be configured to supply between about 700 kilowatts (kW) and about 1000 kW to the first electric machine 308 during the transients of the fuel cell system 300. In other embodiments, the auxiliary energy storage system 316 may be configured to supply between about 800 kW and about 900 kW to the first electric machine 308 during the transients of the fuel cell system 300. Additionally, in such embodiments, the auxiliary energy storage system 316 may be configured to supply between about 50 kW and about 300 kW to the second electric machine 314 during the transients of the fuel cell system 300, or such as between about 100 kW and about 250 kW.

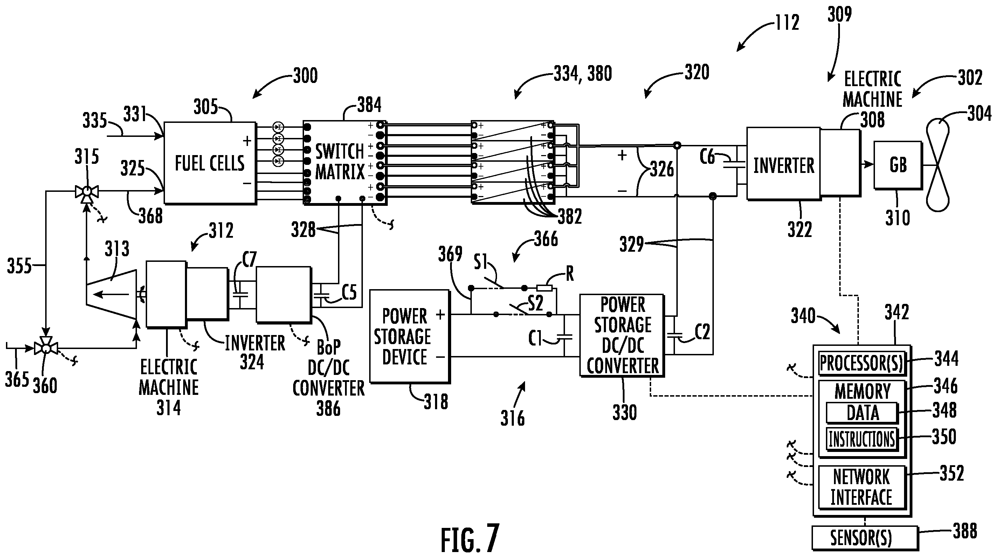

Referring specifically to the embodiment shown in FIG. 7, the power storage DC/DC converter 334 may be a multimodule DC/DC converter 380 having a plurality of modules 382 each electrically connected to a respective fuel cell of the plurality of fuel cells 305 in the fuel cell system 300 via a switch matrix 384. Each module 382 of the plurality of modules 382 may be capable of converting a DC from the respective fuel cell 305 to which the module 382 is electrically connected from one voltage level to another. The switch matrix 384 may be electrically connected to each fuel cell 305 of the plurality of fuel cells 305, each module 382 of the plurality of modules 382, and to the BoP system 312. For example, the BoP system 312 may electrically connect to the switch matrix 384 via the BoP electric bus 328. The switch matrix 384 may be an interconnection grid that routes power from each of the respective fuel cells 305 of the fuel cell system 300 to one of the modules 382 of the plurality of modules 382 and/or to the BoP system 312 (e.g., to provide power to the second electric machine 314 and drive the compressor 313).

Each of the modules 382 may be a bi-directional DC/DC converter that can convert DC from one voltage level to another in both directions. That is, each of the modules 382 may be the bi-directional DC/DC converter that allows for power to flow (1) from the respective fuel cell 305 to which the module 382 is electrically coupled (via the switch matrix 384) to the power storage device 318 (e.g., to charge the power storage device 318) and/or to the first electric machine 308 (e.g., to drive the fan 304) or (2) from the power storage device 318 to the second electric machine 314 to drive the compressor 313. Additionally, the switch matrix 384 may provide power from the fuel cell system 300 to the BoP system 312 (e.g., to the second electric machine 314 to drive the compressor 313).

The multimodule DC/DC converter 380 may be utilized for providing all or a portion of power from the fuel cell system 300 to the first electric machine 308 depending on load requirements. For example, if only a portion of power generated by the fuel cell system 300 is needed at the first electric machine 308 to meet load requirements, then the multimodule DC/DC converter 380 may provide power from one or more fuel cells 305 of the plurality of fuel cells to the first electric machine 308. By contrast, if all of the power generated by the fuel cell system 300 is needed at the first electric machine 308 to meet load requirements, then the multimodule DC/DC converter 380 may provide power all of the fuel cells 305 of the fuel cell system 300 to the first electric machine 308. For example, if the load requirement at the first electric machine 308 is between about 500 kilowatts (kW), and the fuel cell system is producing 1000 kW or 1 megawatt (MW), then half of the power produced by the fuel cell system may be provided to the first electric machine 308. The remainder of the power produced by the fuel cell system 300 may be provided to the auxiliary energy storage system 316 to charge the power storage device 318 and/or provided to the second electric machine 314 to power the compressor 313.

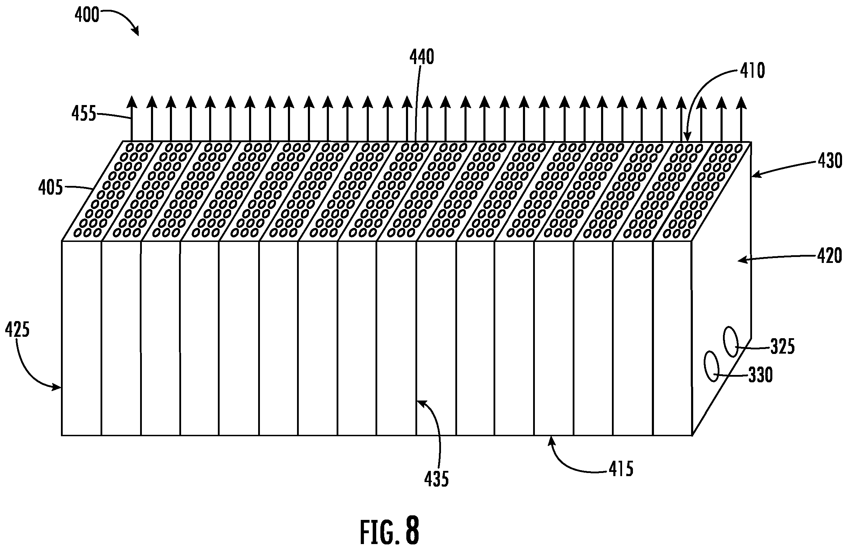

FIG. 8 is a perspective view of the plurality of fuel cells 305 of the fuel cell system 300 of FIG. 3 in accordance with an exemplary aspect of the present disclosure. As discussed above with respect to FIG. 3, the plurality of fuel cells 305 may include a fuel cell stack 400. For the embodiment depicted in FIG. 8, the fuel cell stack 400 is configured as a proton-exchange membrane ("PEM") fuel cell stack having a plurality of PEM fuel cells.

The fuel cell stack 400 shown in FIG. 8 includes a housing 405 having a exhaust outlet side 410 and a side 415 opposite the exhaust outlet side 410, a fuel and air inlet side 420 and a side 425 opposite the fuel and air inlet side 420, and sides 430, 435. The side 430, the side 425, and the side 415 are not visible in the perspective view of FIG. 8.

As mentioned above, the fuel cell stack 400 includes a plurality of fuel cells that are "stacked," e.g., side-by-side from one end of the fuel cell stack 400 (e.g., fuel and air inlet side 420) to another end of the fuel cell stack 400 (e.g., side 425). The exhaust outlet side 410 includes a plurality of combustion outlets 440 defined by each fuel cell of the fuel cell stack 400. During operation, combustion gas 455 is directed from the combustion outlets 440 and out of the housing 405. The combustion gas 455 is generated using fuel and air that is not consumed by the fuel cells inside the housing 405 of the fuel cell stack 400.

The fuel and air inlet side 420 includes one or more fuel inlets and one or more air inlets, such as the first fluid inlet 325 and the second fluid inlet 331. Optionally, the one or more fuel inlets and the one or more air inlets can be on another side of the housing 405. Each of the one or more fuel inlets, such as the second fluid inlet 331, is fluidly coupled with a source of fuel for the fuel cell stack 400, such as one or more pressurized containers of a hydrogen-containing liquid or hydrogen-containing gas. Each of the one or more air inlets, such as the first fluid inlet 325, is fluidly coupled with a source of air for the fuel cells, such the compressor 313 (FIGS. 3-7). The first fluid inlet 325 and the second fluid inlet separately receive the air and fuel from the external sources of air and fuel, and separately direct the air and fuel into the fuel cells.

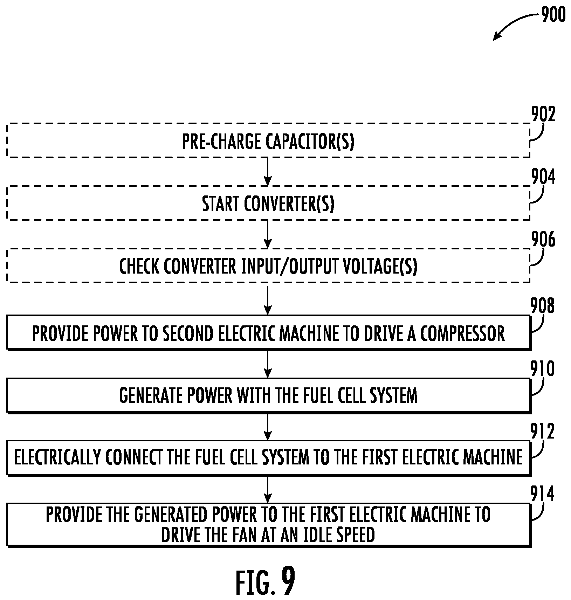

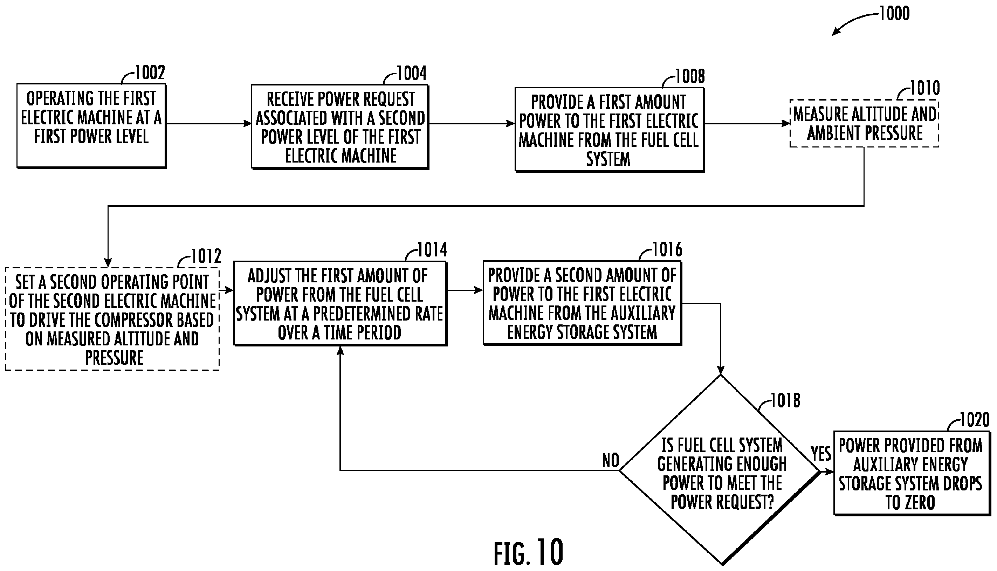

Referring now to FIGS. 9 and 10, two flow diagrams of methods 900 and 1000 in accordance with embodiments of the present disclosure. Particularly, FIG. 9 illustrates a method of performing a start-up sequence of a propulsion system in which a first electric machine is transitioned from stationary to an idle power output (e.g., corresponding to an idle speed of the fan). FIG. 10 illustrates a flow chart of a method 1000 of operating a propulsion system. In general, the methods 900, 1000 will be described herein with reference to the propulsion system 112 described above with reference to FIGS. 1-7. However, it will be appreciated by those of ordinary skill in the art that the disclosed method 900, 1000 may generally be utilized with any other suitable system configuration. In addition, although FIGS. 9 and 10 depict steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure. Dashed boxes indicate optional steps of the methods 900, 1000.

As mentioned above, FIG. 9 depicts a method 900 of performing a start-up sequence of a propulsion system in which a first electric machine is transitioned from stationary (in which the fan is not rotating) to an idle power output (e.g., corresponding to an idle speed of the fan). That is, the fan may be stationary prior to execution of the method 900, and after the method 900, the fan may be rotating at an idle speed. The method 900 may include, at (902) an initial step of pre-charging the capacitor(s) of the propulsion system. The method 900 may also include, at (904), starting the converters and, at (906) checking the converter output voltages.

Specifically referring to the embodiment shown in FIG. 5, steps 902 through 906 may be performed in the manner described below. First, the first switch S1 may be moved to a closed position and the second switch S2 moved to an open position to charge the first capacitor C1 over the resistor R with the power storage device 318 (and subsequently closing the second switch S2 when the first capacitor C1 is fully charged). Next, the input voltage of the power storage DC/DC converter 330 may be checked (e.g., with the controller 340 to determine whether the input voltage is within a predetermined margin that is acceptable to start the converter). Subsequently, the controller 340 may start the power storage DC/DC converter 330 (by allowing power to flow through the power storage DC/DC converter 330), which in turn starts the charging of the second, third, and sixth capacitors C2, C3, C6. Next, the controller 340 may check the power storage DC/DC converter 330 output voltage and/or the fuel cell DC/DC converter 334 input voltage (to determine whether the input/output voltages are within a predetermined margin). Subsequently, if the output voltage is within the predetermined margin, the controller 340 may start the fuel cell DC/DC converter 334 (by allowing power to flow through the fuel cell DC/DC converter 334), which in turn starts the charging of the fourth, the fifth, and/or the seventh capacitors C4, C5, C7. Lastly, the controller 340 may check the fuel cell DC/DC converter 334 input voltage and the BoP DC/DC converter 386 input voltage (to determine whether the input voltages are within a predetermined margin).

Alternatively, referring specifically to the embodiment shown in FIG. 6, steps 902 through 906 may be performed in the manner described below. First, the first switch S1 may be moved to a closed position and the second switch S2 moved to an open position to charge the first capacitor C1 over the resistor R with the power storage device 318 (and subsequently closing the second switch S2 when the first capacitor C1 is fully charged). Next, the input voltage of the power storage DC/DC converter 330 may be checked (e.g., with the controller 340 to determine whether the input voltage is within a predetermined margin that is acceptable to start the converter). Subsequently, the controller 340 may start the power storage DC/DC converter 330 (by allowing power to flow through the power storage DC/DC converter 330), which in turn starts the charging of the second, third, fifth, and sixth capacitors C2, C3, C5, C6. Next, the controller 340 may check the power storage DC/DC converter 330 output voltage and/or the fuel cell DC/DC converter 334 input voltage (to determine whether the input/output voltages are within a predetermined margin). Subsequently, if the output voltage is within the predetermined margin, the controller 340 may start the fuel cell DC/DC converter 334 (by allowing power to flow through the fuel cell DC/DC converter 334), which in turn starts the charging of the fourth, the fifth, and/or the seventh capacitors C4 andC7. Lastly, the controller 340 may check the fuel cell DC/DC converter 334 input voltage and the BoP DC/DC converter 386 input voltage (to determine whether the input voltages are within a predetermined margin).

In many implementations, the method 900 may further include, at (908), providing power to a second electric machine to drive a compressor and generate pressurized air. The power may be provided to the second electric machine with one or both of the fuel cell system and/or the power storage supply. Subsequently, the method 900 may include, at (910) generating power with the fuel cell system at least partially with the pressurized air. For example, fuel (e.g., hydrogen) and air (e.g., pressurized air from the compressor) are supplied to a fuel cell system to generate electrical energy by electrochemical reaction between the fuel and the air. Subsequently, the method 900 may include, at (912), electrically connecting the fuel cell system to the first electric machine. Electrically connecting at (912) may include closing the first switch and the second switch (FIGS. 3-6) and/or by controlling a switch matrix (FIG. 7). Lastly, the method 900 may include, at (914), providing the generated power from the fuel cell system to the first electric machine to complete the start-up sequence (such that the first electric machine is being provided the idle power output from the fuel cell system).

Referring now to FIG. 10, as mentioned above, a flow chart of a method 1000 of operating a propulsion system (such as the propulsion system 112 described above with reference to FIGS. 3-7) is illustrated in accordance with embodiments of the present disclosure. As shown, the method 1000 may include, at (1002), operating a first electric machine drivingly connected to a fan section at a first power level. The first power level may correspond to an idle power output of the first electric machine (such that the fan may rotate at an idle speed when the electric machine is operating at the first power level).

In many implementations, the method 1000 may include, at (1004), receiving a power request associated with a second power level of the first electric machine. The second power level is different than the first power level (e.g., higher or lower). For example, while the first electric machine is operating at the first power level (e.g., an idle power output), the power request may be received by a controller operably connected to the first electric machine to increase or decrease the power output of the first electric machine from the first power level to the second power level. In some embodiments, the request may be made by an engine controller in communication with the controller that operates the first electric machine.

The method 1000 may also include, at (1008) providing a first amount of power to the first electric machine from a fuel cell system. In exemplary embodiments, providing at (1008) may be done in response to receiving the power request associated with the second power level. For example, in response to receiving the power request associated with the second power level, the auxiliary energy storage system and the fuel cell system may collectively provide power to the first electric machine to meet the power request and operate the first electric machine at the second power level (thereby increasing/decreasing the fan speed).

In some implementations, the method 1000 may include, at (1010), measuring altitude and ambient pressure. For example, measuring at (1010) may be performed with one or more sensors (such as an altitude sensor and/or a pressure sensor) in operable communication with the controller. That is, the controller may receive data indicative of an altitude and/or an ambient pressure from the one or more sensors. In such implementations, the method 1000 may include, at (1012) setting a second operating point of the second electric machine to drive a compressor based on measured altitude and pressure. That is, the method may include setting an operating point of a second electric machine to drive the compressor in fluid communication with the fuel cell system at least partially based on the data indicative of the altitude and the pressure. The compressor may provide pressurized air to the fuel cell system.

As shown, the method 1000 may further include, at (1014), adjusting (e.g., increasing or decreasing) the first amount of power from the fuel cell system to the first electric machine at a predetermined rate or ramp rate over a time period. Additionally, the method may include, at (1016), providing a second amount of power from the auxiliary energy storage system to the first electric machine over the time period to meet the power request associated with the second power level. A sum of the first amount of power and the second amount of power is approximately equal to the second power level. Specifically, the sum of the first amount of power and the second amount of power is equal to the second power level (e.g., the load requirement at the first electric machine) plus any losses of the system. That is, the auxiliary energy storage system may automatically balance the power that is drawn from the first electric machine minus the first amount of power being provided by the fuel cell system. In other words, for a given power requirement at the first electric machine, the fuel cell system may provide the first amount of power (which may be increased/decreased at the ramp rate over the time period), and the auxiliary energy storage system may provide the remainder of the power required at the first electric machine (e.g., the second amount of power), such that the power provided by the auxiliary energy storage system also changes at the ramp rate. The ramp rate may be at least partially based on the set operating point of the compressor and/or based on a slew rate of the fuel cell system.

In many embodiments, the method may further include, at (1018), determining whether the fuel cell system is generating enough power to meet the power request associated with the second power level at the first electric machine. If not, then the fuel cell system may continue to be adjusted until the first amount of power generated by the fuel cell system is equal (or approximately equal) to the second power level. By contrast, if the first amount of power generated by the fuel cell system is equal (or approximately equal) to the second power level (such that the fuel cell system can support the power request alone), then, at (1020), power provided from the auxiliary energy storage system to the first electric machine may drop to zero (or approximately zero).

Referring now to FIG. 11, a graph 1100 of power provided to an electric machine (such as the first electric machine). The graph 1100 of power vs. time illustrates the transition between the auxiliary energy storage system and the fuel cell system in response to an increased power level request from the first electric machine. The graph 1100 depicts an implementation of the method 1000 described above with reference to FIG. 10. As shown, three lines are plotted: a second amount of power 1106 provided to a first electric machine from an auxiliary energy storage system, a first amount of power 1108 provided by a fuel cell system to the first electric machine, and a total power 1110 (e.g., the sum of the first amount of power and the second amount of power). As shown, the power provided by the fuel cell system may be adjusted (e.g., linearly) over a time period 1112 at a ramp rate, and the remainder of the power required by the first electric machine may be provided by the auxiliary energy storage system. For example, prior to the start of the time period 1112, the fuel cell system may be proving enough power to meet a first power level 1102 of the first electric machine. At the start of the time period 1112, a power level request may be received associated with a second power level 1104 of the electric machine. The second power level 1104 may be greater than the first power level 1102. In response, the auxiliary energy storages system may instantaneously meet the request and begin ramping down at a ramp rate while the fuel cell system begins ramping up at the ramp rate. The ramp rate may be based on a slew rate of the fuel cell. By the end of the time period 1112, the second power level 1104 may be met by only the fuel cell system, such that power provided by the auxiliary energy storage system may drop to zero (or approximately zero).

The propulsion system and method disclosed herein advantageously allows for the power demands of the electric machine to be met instantaneously regardless of the limited ramp up/down rate of the fuel cell system. That is, in order to ensure power output demands are met (i.e., that a net direct-current power output to the first electric machine is at a desired level), the power storage device of the auxiliary energy storage system may provide instantaneous increases and decreases in its power output to meet the increase and decrease rates of the propulsion or load power while the fuel cell ramps up/down based on a limited slew rate. In this way, the power storage device may be utilized for compensating for the fuel cell system during transients of the fuel cell system (e.g., when the fuel cell system is ramping up or down). It will be appreciated that, as used herein, the term "slew rate," as it relates to the fuel cell system, refers to a rate of change of the fuel cell system direct-current voltage output of the fuel cell system, expressed in a measure of power per unit of time, e.g., kilowatts per second (kW/s), volts per second (V/s), or amps per second (A/s). As such, adjusting the power output from the fuel cell system may be limited by system's slew rate, and the auxiliary energy storage system may be utilized for compensating for the slew rate of the fuel cell system by providing power to the first electric machine while the fuel cell system ramps up/down at the slew rate. In various embodiments, the ramp rate (or slew rate) of the fuel cell system may be between about 10 kW/sec and about 100 kW/sec, or such as between about 25 kW/sec and about 75 kW/sec.

Additionally, the propulsion system disclosed herein advantageously includes an integrated BoP system. The integrated BoP system favorably reduces the weight and volume of the propulsion system by only utilizing a single compressor to feed oxidant gas (e.g., air) to the fuel cell system (rather than several compressors and an air compressor tank). Further, the propulsion system disclosed herein advantageously includes the auxiliary energy storage system, which may be utilized for powering the fan during transient operations of the fuel cell system (e.g., when the fuel cell is ramping up/down power output). For example, the auxiliary energy storage system allows for load requirements of the fan to be met while enabling starting or ramping up the compressor of the BoP system, starting/ramping up the fuel cells of the fuel cell system, and/or pre-charging capacitors of the propulsion system.

Furthermore, the propulsion system advantageously includes the fuel cell system and the auxiliary storage system, which together can meet the high load requirements of associated with aircraft operation during transients of the fuel cell system (i.e., during the ramp up/down of the fuel cell system). In particular, the inventors discovered, unexpectedly, in the course of designing the propulsion system disclosed herein, that the fuel cell system and the auxiliary storage system can be utilized together to meet the high load requirements of the fan section of an aircraft during transients of the fuel cell system without impacting the operation of the fan section or the aircraft during the transients (e.g., without having power drops during the transients, which could otherwise impact operation or flight of the aircraft).

Further aspects are provided by the subject matter of the following clauses:
A propulsion system for an aircraft, comprising: a fan section comprising a fan; an electric bus; a first electric machine electrically connected to the electric bus and configured to drive rotation of the fan of the fan section; a second electric machine electrically connected to the electric bus and configured to drive rotation of a compressor in a balance of plant (BoP) system; a fuel cell system electrically connected to the first electric machine and the second electric machine via the electric bus, wherein the fuel cell system is fluidly connected to the compressor; an auxiliary energy storage system electrically connected to the first electric machine, the second electric machine, and the fuel cell system via the electric bus, the auxiliary energy storage system configured to supply power to the first electric machine and the second electric machine during transients of the fuel cell system.

The propulsion system as in any preceding clause, wherein the auxiliary energy storage system is configured to supply between about 700 kilowatts (kW) and about 1000 kW to the first electric machine during the transients of the fuel cell system, and wherein the auxiliary energy storage system is configured to supply between about 50 kW and about 300 kW to the second electric machine during the transients of the fuel cell system.

The propulsion system as in any preceding clause, further comprising: a controller comprising memory and one or more processors, the memory storing instructions that when executed by the one or more processors cause the propulsion system to perform operations including: operating the first electric machine at a first power level; receiving, with the controller, a power request associated with a second power level of the first electric machine that is different than the first power level; providing a first amount of power to the first electric machine from the fuel cell system; adjusting, over a time period, the first amount of power from the fuel cell system to the first electric machine at a ramp rate of the fuel cell system; and providing a second amount of power to the first electric machine from an auxiliary energy storage system to meet the power request associated with the second power level, wherein a sum of the first amount of power and the second amount of power is approximately equal to the second power level.

The propulsion system as in any preceding clause, wherein the first power level is between 0 kilowatts (kW) and about 400 kW, wherein the second power level is between about 1000 kW and about 700 kW, and wherein the ramp rate is between about 10 kW/sec and about 100 kW/sec.

The propulsion system as in any preceding clause, wherein the auxiliary energy storage system includes a power storage device, and wherein the fuel cell system is configured to selectively charge the power storage device.

The propulsion system as in any preceding clause, wherein the power storage device is one of a battery or a super capacitor.

The propulsion system as in any preceding clause, wherein the auxiliary energy storage system includes a power storage DC/DC converter electrically connected to the electric bus between the electric machine and the power storage device.

The propulsion system as in any preceding clause, wherein the power storage DC/DC converter is a multimodule DC/DC converter having a plurality of modules each electrically connected to a respective fuel cell in the fuel cell system via a switch matrix.

The propulsion system as in any preceding clause, wherein the auxiliary energy storage system includes a pre-charge switch system electrically connected to the electric bus between the power storage device and the power storage DC/DC converter.

The propulsion system as in any preceding clause, further comprising a fuel cell DC/DC converter electrically connected to the electric bus between the fuel cell system and the first electric machine.

The propulsion system as in any preceding clause, wherein the second electric machine electrically connects to the electric bus between the fuel cell system and the fuel cell DC/DC converter.

The propulsion system as in any preceding clause, wherein the second electric machine electrically connects to the electric bus between the fuel cell DC/DC converter and the first electric machine.

The propulsion system as in any preceding clause, wherein the auxiliary energy storage system is electrically connected to the electric bus between the first electric machine and the fuel cell DC/DC converter.

The propulsion system as in any preceding clause, further comprising a recirculation valve and a bypass valve, wherein the bypass valve is fluidly connected to the compressor, the fuel cell system, and the recirculation valve, and wherein the recirculation valve is fluidly connected to the compressor and an ambient environment.

The propulsion system as in any preceding clause, wherein the BoP system further comprises a BoP DC/DC converter electrically connected to the electric bus between the fuel cell and the second electric machine.

The propulsion system as in any preceding clause, further comprising a fuel cell switch system electrically connected to the electric bus, the fuel cell switch system having one or more switches movable between an open position and a closed position and configured for selectively electrically coupling the fuel cell system to the electric bus.

The propulsion system as in any preceding clause, further comprising a controller comprising memory and one or more processors, the memory storing instructions that when executed by the one or more processors cause the propulsion system to perform operations including:
performing a start-up sequence in which the first electric machine is transitioned from stationary to an idle power output, wherein performing the start-up sequence comprises: providing power to the second electric machine to drive the compressor; generating power with the fuel cell system; and providing the generated power from the fuel cell system to the first electric machine to rotate the fan at the idle speed.

A method of operating a propulsion system, the method comprising: operating a first electric machine drivingly connected to a fan section at a first power level; receiving a power request associated with a second power level of the first electric machine, the second power level being different than the first power level;
providing a first amount of power to the first electric machine from a fuel cell system; adjusting, over a time period, the first amount of power from the fuel cell system to the first electric machine at a predetermined rate; and providing a second amount of power to the first electric machine from an auxiliary energy storage system to meet the power request associated with the second power level, wherein a sum of the first amount of power and the second amount of power is approximately equal to the second power level.

The method as in any preceding clause, further comprising performing a start-up sequence in which the first electric machine is transitioned from stationary to an idle power output, wherein performing the start-up sequence comprises: providing power to a second electric machine to drive a compressor and generate pressurized air; generating power with the fuel cell system at least partially with the pressurized air; and providing the generated power from the fuel cell system to the first electric machine to complete the start-up sequence, and wherein the idle power output corresponds to the first power level.

The method as in any preceding clause, further comprising: receiving data indicative of an altitude and an ambient pressure from one or more sensors; and setting an operating point of a second electric machine to drive a compressor in fluid communication with the fuel cell system at least partially based on the data indicative of the altitude and the pressure, wherein the predetermined rate is at least partially based on the set operating point of the second electric machine.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A propulsion system (112) for an aircraft, comprising:
a fan section (302) comprising a fan (304);
an electric bus (320);
a first electric machine (308) electrically connected to the electric bus (320) and configured to drive rotation of the fan (304) of the fan section (302);
a second electric machine (314) electrically connected to the electric bus (320) and configured to drive rotation of a compressor (313) in a balance of plant (BoP) system (312);
a fuel cell system (300) electrically connected to the first electric machine (308) and the second electric machine (314) via the electric bus (320), wherein the fuel cell system (300) is fluidly connected to the compressor (313);
an auxiliary energy storage system (316) electrically connected to the first electric machine (308), the second electric machine (314), and the fuel cell system (300) via the electric bus (320), the auxiliary energy storage system (316) configured to supply power to the first electric machine (308) and the second electric machine (314) during transients of the fuel cell system (300).

2. The propulsion system (112) of claim 1, wherein the auxiliary energy storage system is configured to supply between about 700 kilowatts (kW) and about 1000 kW to the first electric machine (308) during the transients of the fuel cell system (300), and wherein the auxiliary energy storage system is configured to supply between about 50 kW and about 300 kW to the second electric machine (314) during the transients of the fuel cell system (300).

3. The propulsion system (112) of claim 1 or 2, further comprising:
a controller (340) comprising memory (346) and one or more processors (344), the memory (346) storing instructions (350) that when executed by the one or more processors (344) cause the propulsion system (112) to perform operations including:
operating the first electric machine (308) at a first power level (1102);
receiving, with the controller (340), a power request associated with a second power level (1104) of the first electric machine (308) that is different than the first power level (1102);
providing a first amount of power (1108) to the first electric machine (308) from the fuel cell system (300);
adjusting, over a time period (1112), the first amount of power (1108) from the fuel cell system (300) to the first electric machine (308) at a ramp rate of the fuel cell system (300); and
providing a second amount of power (1106) to the first electric machine (308) from an auxiliary energy storage system (316) to meet the power request associated with the second power level (1104), wherein a sum of the first amount of power (1108) and the second amount of power (1106) is approximately equal to the second power level (1104).

4. The propulsion system (112) of claim 3, wherein the first power level is between 0 kilowatts (kW) and about 400 kW, wherein the second power level is between about 1000 kW and about 700 kW, and wherein the ramp rate is between about 10 kW/sec and about 100 kW/sec.

5. The propulsion system (112) of any preceding claim, wherein the auxiliary energy storage system (316) includes a power storage device (318), and wherein the fuel cell system (300) is configured to selectively charge the power storage device (318).

6. The propulsion system (112) of claim 5, wherein the power storage device (318) is one of a battery or a super capacitor.

7. The propulsion system (112) of claim 5 or 6, wherein the auxiliary energy storage system (316) includes a power storage direct current/direct current (DC/DC) converter (330) electrically connected to the electric bus (320) between the electric machine (308) and the power storage device (318).

8. The propulsion system (112) of claim 7, wherein the power storage DC/DC converter (330) is a multimodule DC/DC converter (380) having a plurality of modules (382) each electrically connected to a respective fuel cell (305) in the fuel cell system (300) via a switch matrix (384).

9. The propulsion system (112) of claim 7 or 8, wherein the auxiliary energy storage system (316) includes a pre-charge switch system (366) electrically connected to the electric bus (320) between the power storage device (318) and the power storage DC/DC converter (330).

10. The propulsion system (112) of any preceding claim, further comprising a fuel cell DC/DC converter (334) electrically connected to the electric bus (320) between the fuel cell system (300) and the first electric machine (308).

11. The propulsion system (112) of claim 10, wherein the second electric machine (314) electrically connects to the electric bus (320) between the fuel cell system (300) and the fuel cell DC/DC converter (334).

12. The propulsion system (112) of claim 10, wherein the second electric machine (314) electrically connects to the electric bus (320) between the fuel cell DC/DC converter (334) and the first electric machine (308).

13. The propulsion system (112) of claim 10 or 11, wherein the auxiliary energy storage system (316) is electrically connected to the electric bus (320) between the first electric machine (308) and the fuel cell DC/DC converter (334).

14. The propulsion system (112) of any preceding claim, further comprising a recirculation valve (360) and a bypass valve (315), wherein the bypass valve (315) is fluidly connected to the compressor (313), the fuel cell system (300), and the recirculation valve (360), and wherein the recirculation valve (360) is fluidly connected to the compressor (313) and an ambient environment.

15. A method of operating a propulsion system (112), the method comprising:
operating a first electric machine (308) drivingly connected to a fan section (302) at a first power level (1102);
receiving a power request associated with a second power level (1104) of the first electric machine (308), the second power level (1104) being different than the first power level (1102);
providing a first amount of power to the first electric machine (308) from a fuel cell system (300);
adjusting, over a time period (1112), the first amount of power from the fuel cell system (300) to the first electric machine (308) at a ramp rate; and
providing a second amount of power to the first electric machine (308) from an auxiliary energy storage system (316) to meet the power request associated with the second power level (1104), wherein a sum of the first amount of power and the second amount of power is approximately equal to the second power level (1104).
